# EUROPÄISCHE PATENTSCHRIFT

(11) **EP 4 104 964 B1**
(45) Veröffentlichungstag und Bekanntmachung des Hinweises auf die Patenterteilung: **04.03.2026**
(21) Anmeldenummer: 22178112.3
(22) Anmeldetag: 09.06.2022
(51) Int. Cl.: B23K 26/0622, B23K 26/03, B23K 26/082, B23K 26/364, B23K 26/70, B23K 37/00, B25J 9/00, B23K 101/18, B23K 101/00

(54) **VERFAHREN UND VORRICHTUNG ZUR HERSTELLUNG EINER SOLLBRUCHLINIE, UND BEARBEITUNGSANLAGE MIT EINER SOLCHEN VORRICHTUNG**
METHOD AND DEVICE FOR PRODUCING A PREDETERMINED BREAKING LINE, AND MACHINING INSTALLATION WITH SUCH A DEVICE
PROCÉDÉ ET DISPOSITIF DE PRODUCTION D'UNE LIGNE DE RUPTURE, ET INSTALLATION D'USINAGE DOTÉE D'UN TEL DISPOSITIF

(30) Priorität: 15.06.2021 DE 102021115496
(43) Veröffentlichungstag der Anmeldung: 21.12.2022
(73) Patentinhaber: JENOPTIK Automatisierungstechnik GmbH, 07745 Jena (DE)
(72) Erfinder: Bode-Mosig, Andreas, 07747 Jena (DE); Dienert, Sebastian, 07743 Jena (DE); Keim, Carsten, 07749 Jena (DE); Preuß, Norbert, 07743 Jena (DE); Remm, Markus, 07366 Rosenthal (DE); Sonnefeld, Andreas, 07646 Laasdorf (DE)
(74) Vertreter: Gleim Petri Patent- und Rechtsanwaltspartnerschaft mbB

(56) Entgegenhaltungen:
- WO-A1-2006/074840
- DE-A1- 102010 060 958
- DE-A1- 102015 201 689
- DE-A1- 102016 121 644
- DE-A1- 102017 111 211

## Beschreibung

Die Erfindung betrifft ein Verfahren, eine Vorrichtung zum Herstellen einer Sollbruchlinie in ein Fahrzeuginnenverkleidungsteil, bevorzugt eine Airbagabdeckung, die für einen universellen Einsatz in einer Fertigungslinie geeignet ist, entsprechend dem Oberbegriff der Ansprüche 1 und 4 (siehe z.B. DE 10 2016 121644 A1). Diese Erfindung betrifft auch eine Bearbeitungsanlage mit einer solchen Vorrichtung, siehe Anspruch 6.

Universeller Einsatz der Vorrichtung heißt hier, dass sie in Kombination mit verschiedenen Zustellvorrichtungen, auch mehreren Zustellvorrichtungen, auch unterschiedlicher Zustellgenauigkeit und für die Herstellung von Sollbruchlinien unterschiedlicher Kontur geeignet ist. Die Vorrichtung enthält eine Sensormatrix und eine Laserscaneinrichtung mit der bei einer Bearbeitung des Fahrzeuginnenverkleidungsteiles ein über das Fahrzeuginnenverkleidungsteil scannender Laserstrahl entlang einer Sollbruchlinie ein Material abträgt, bis durch die Einzelsensoren der Sensormatrix ein durch das Fahrzeuginnenverkleidungsteil transmittierender Anteil des Laserstrahls detektiert wird.

Die Erfindung betrifft auch eine Bearbeitungsanlage mit einer erfindungsgemäßen Vorrichtung und zwei Zustellvorrichtungen.

Es sei vorangestellt, dass im Sinne dieser Beschreibung als Sollbruchlinie eine Linie bezeichnet wird, entlang der die Sollbruchlinie erzeugt wird, unabhängig vom Bearbeitungszustand.

Die Herstellung von Sollbruchlinien mittels Laser, in Ausstattungselemente eines Fahrzeuges, z. B. für Airbag-Öffnungen im Armaturenbrett, in der Türverkleidung oder in der Lenkradnabe oder als Bruchstellen an in den Fahrgastraum ragenden Bauteilen, wie z. B. Tassenhaltern, ist seit Langem bekannt. Aufgrund der hohen Anforderungen zum einen an deren zuverlässiges Aufbrechen im Bedarfsfall und zum anderen an ein ästhetisches Erscheinungsbild der Ausstattungsteile, bei dem ein Fahrzeuginsasse die Sollbruchöffnungen mit bloßem Auge nicht wahrnehmen soll, erfolgt ein Materialabtrag entlang einer die Sollbruchöffnungen umschreibenden Sollbruchlinien sensorüberwacht bzw. sensorgesteuert.

Auch bei anderen Anwendungen, z. B. in der Verpackungsindustrie, ist es bekannt, Sollbruchlinien mittels Laser als Auftrennhilfen in Behältern u.ä. einzubringen.

Um eine Sollbruchlinie durch einen Materialabtrag mittels Laser herzustellen, werden in das betreffende Fahrzeuginnenverkleidungsteil entlang einer vorgegebenen Linie nicht vollständig durchtrennende Schlitze oder Löcher bzw. so genannte Mikroperforationslöcher, die das Fahrzeuginnenverkleidungsteil nur mit einem sehr kleinen Loch durchdringen, eingebracht. Durch die Sensorüberwachung bzw. Sensorsteuerung können hierbei entweder eine reproduzierbare, verbleibende Restwandstärke oder kleine Löcher mit einem reproduzierbaren Durchmesser entlang der Linie, die Sollbruchlinie bildend, hergestellt werden, indem bei Detektion von durch die Restwand oder das Loch transmittierender Strahlungsenergie die Überschreitung eines vorgegebenen Schwellwertes als Steuergröße verwendet wird. Dazu ist wenigstens ein Sensor auf einer dem Laser gegenüberliegenden Seite des Fahrzeuginnenverkleidungsteiles (Sichtseite) angeordnet, der während der Bearbeitung einen transmittierenden Anteil der Bearbeitungslaserstrahlung dann detektiert, wenn das Fahrzeuginnenverkleidungsteil innerhalb der Sollbruchlinie am jeweiligen Bearbeitungspunkt nur noch eine bestimmte Restwandstärke oder bereits ein Mikroloch aufweist. Die erforderliche Relativbewegung zur Erzeugung von Sollbruchlinien kann grundsätzlich durch den Laserstrahl als Werkzeug oder das Fahrzeuginnenverkleidungsteil, bei feststehendem Werkzeug erzeugt werden, wobei sich die Bewegung des Laserstrahls als einfacher zu realisieren ergeben hat. Im Vergleich zu einer robotergesteuerten Führung einer Laserquelle oberhalb und entlang der Sollbruchlinie ist ein zwei- bzw. dreidimensionales Scannen eines Laserstrahls entlang der Sollbruchlinie technisch einfach umsetzbar und erlaubt darüber hinaus eine deutlich schnellere Bearbeitung.

Die DE 10 2018 129 329 A1 offenbart ein Verfahren zur farbenlackabtragenden Laserbearbeitung eines lackierten Werkstücks mit einer Laserbearbeitungsvorrichtung sowie die Laserbearbeitungsvorrichtung. Das Werkstück wird in einem Arbeitsbereich der Laserbearbeitungsvorrichtung angeordnet und durch ein Sensorelement der Laserbearbeitungsvorrichtung wird eine Position und/oder eine Ausrichtung Werkstücks erfasst. Anschließend können Werte für Betriebsparameter der Laserbearbeitungsvorrichtung erzeugt werden, wobei die Betriebsparameter in Abhängigkeit von der erfassten Position und/oder der erfassten Ausrichtung generiert werden können. Ein Laserstrahl wird von der Laserbearbeitungsvorrichtung gemäß der generierten Werte erzeugt und das Werkstück mit dem Laserstrahl beaufschlagt. Der Laserstrahl wird so bewegt, dass entlang einer Arbeitsbahn Material einer Farbenlackschicht abgetragen wird.

Die DE 10 2005 026 906 A1 offenbart ein Innenverkleidungsteil für Fahrzeuge und ein Verfahren zum Herstellen eines solchen Innenverkleidungsteils. Eine Vorrichtung zur Durchführung des Verfahrens weist einen Laser mit einer Fokussieroptik sowie ein Scannerspiegelsystem auf. Ein Fokus eines von dem Laser erzeugten Laserstrahls liegt in einer Tiefe im Innenverkleidungsteil, wobei an dem Fokus Material abgetragen wird.

Aus der DE 10 2017 112 072 A1 ist eine Vorrichtung und ein Verfahren zum teilweisen Entfernen einer auf ein Fahrzeugrad aufgebrachten Beschichtung bekannt. Bei dem Verfahren wird eine Fläche auf dem Fahrzeugrad einem von einer Strahlungsquelle erzeugten und aus einem Bearbeitungskopf austretenden Bearbeitungsstrahl so lange ausgesetzt, bis zumindest ein Teil der Beschichtung im Bereich der Fläche thermisch zerstört wird.

Aus der DE 10 2005 054 607 A1 ist ein Verfahren zur Bestimmung einer Restschichtdicke bei der Ausbildung von Sacklöchern oder Schnittfugen in Bauteilen bekannt, bei dem Sacklöcher oder Schnittfugen mittels Laserstrahlung ausgehend von einer Seite eines Bauteils ausgebildet werden und an der gegenüberliegenden Oberfläche des Bauteils die Temperatur berührungslos mittels von dieser Oberfläche emittierter elektromagnetischer Strahlung bestimmt und damit die Restschichtdicke im jeweiligen Bearbeitungsbereich der Laserstrahlung ermittelt wird.

Ein in der Patentschrift EP 1 118 421 B1 offenbartes Verfahren beschreibt die Herstellung einer aus Perforationslöchern bestehenden Sollbruchlinie mittels gepulster oder kontinuierlicher Laserstrahlung. Der Laserstrahl wird mittels einer Bearbeitungsoptik auf die Rückseite eines Fahrzeuginnenverkleidungsteils gerichtet. Gegenüber der Vorderseite des Fahrzeuginnenverkleidungsteils befindet sich ein Sensor im Strahlengang des Lasers, das heißt auf der optischen Achse der Bearbeitungsoptik. Während einer Relativbewegung zwischen Fahrzeuginnenverkleidungsteil und Bearbeitungsoptik entlang einer zu erzeugenden Sollbruchlinie gibt der Laser eine begrenzte Folge von sich am Fahrzeuginnenverkleidungsteil teilweise überlagernden Einzelpulsen oder eine kontinuierliche Laserstrahlung von begrenzter Dauer ab. Dabei wird im Fahrzeuginnenverkleidungsteil ein Schlitz mit einer kontinuierlich abnehmenden Restwandstärke geschaffen. Die Laserstrahlung wird unterbrochen, sobald mit dem Sensor auf der Vorderseite ein Durchbruch der Laserstrahlung detektiert wird. Soll die erforderliche Relativbewegung durch den Laser durchgeführt werden, muss eine Hochgenaue Mitführung des Sensors realisiert werden, damit die Sensorachse und die optische Achse der Bearbeitungsoptik stets zusammenfallen.

Auch gemäß der EP 0 827 802 B1 wird ein definierter Materialabtrag bis auf eine verbleibende Restwandstärke (Materialdicke) gesichert, indem von der Außenseite her durch einen Sensor die transmittierende Strahlung am Bearbeitungsort detektiert wird. Zu diesem Zweck muss der Sensor auf der optischen Achse des auf das Fahrzeuginnenverkleidungsteil gerichteten Laserstrahls angeordnet sein. Zur Realisierung der zur Erzeugung der Sollbruchlinie notwendigen Relativbewegung zwischen dem Laserstrahl und dem Fahrzeuginnenverkleidungsteil sind hier keine Ausführungen gemacht.

Durch die EP 3 321 024 A1 ist ein Verfahren und eine Vorrichtung zur Herstellung einer Schwächungslinie in ein flächenhaftes Werkstück entlang einer vorgegebenen Kontur durch Materialabtrag mittels Laser offenbart. Bei dem Verfahren wird ein Werkstück in einem Arbeitsfeld zwischen einer Anordnung von Sensoren und einem Laserscanner angeordnet. Der Laserscanner scannt einen gepulsten Laserstrahl über eine Rückseite des flächenhaften Werkstücks, entlang einer Schwächungslinie, wobei ein Materialabtrag in Form von Löchern jeweils bis zu einer vorgegebenen Restwandstarke an einer Vielzahl von Abtragsorten entlang der Schwächungslinie bewirkt wird. Durch einzelne Sensoren werden während des Materialabtrages durch einen an den Abtragsorten transmittierenden Anteil des Laserstrahls erzeugte Messsignale erfasst. In der Folge wird ein Vergleichssignal gebildet, das mit einem Referenzsignal, dem die vorgegebene Restwandstarke zugeordnet ist, verglichen wird. Der die Laserpulse generierende Lasergenerator wird so angesteuert, dass auf die Abtragsorte jeweils nur solange Laserpulse auftreffen, bis die vorgegebene Restwandstärke erreicht ist. Die transmittierende Laserstrahlungsleistung eines Laserpulses wird dann detektiert, wenn sie oberhalb eines unteren Grenzwertes des Empfindlichkeitsbereiches des Sensors liegt und die Schwächungslinie kann innerhalb eines Sichtfeldes der Anordnung von Sensoren beliebig positioniert werden. Bei dem offenbarten Verfahren sind keine Kameras und bildverarbeitende Methoden zur optischen Überwachung der Positionierung von zu bearbeitenden Werkstücken und einer gegebenenfalls durchzuführenden Anpassung der Soll-Bearbeitungsdaten an die Ist-Situation vorgesehen. Aus den zeitgleich erfassten Messwerten werden zudem keine Vergleichsmesswerte gebildet.

Aus dem Stand der Technik sind auch Vorrichtungen bekannt mit einer Sensoranordnung die die Sollbruchlinie in ihrer Kontur nachbildet. Die linienförmige Sensoranordnung und das zu bearbeitende Werkstück bleiben hier ortsfest und ein Laserstrahl wird entlang der Sollbruchlinie geführt. Für eine gleiche reproduzierbare Restwandstärke an mehreren gleichen Fahrzeuginnenverkleidungsteil, muss dieses jeweils einer gleichen Relativlage genau zur Sensoranordnung angeordnet werden.

Aus der DE 10 2012 109 245 B3 ist ein Verfahren und eine Vorrichtung zur Bearbeitung von nicht-rotationssymmetrischen Werkstücken mittels Laserstrahlung bekannt. Die Vorrichtung kann mehrere Zustelleinrichtungen, Bearbeitungseinrichtungen oder Spanneinrichtungen aufweisen, die parallel zueinander betrieben sein können, wodurch mehrere Werkstücke oder wechselnde Werkstücke zu einer Bearbeitungseinrichtung zustellbar sind.

Die DE 10 2019 133 745 A1 offenbart ein Fertigungssystem zur laserbearbeitenden Fertigung eines Werkstücks sowie ein Verfahren zur Fertigung eines laserbearbeiteten Werkstücks. Eine Ausgestaltung der Vorrichtung weist eine Positioniervorrichtung auf, die beispielswiese als mehrachsiger Roboter ausgebildet sein kann und die dazu eingerichtet ist, einen Batch aus einer Mehrzahl von Werkstücken, insbesondere einen auf einem Werkstückträger angeordnetem Batch aus einer Mehrzahl von Werkstücken, relativ zu einer Laserbearbeitungsvorrichtung zu positionieren. Ein vorhandenes Transfersystem kann ein Robotersystem mit mindestens einem mehrachsigen Roboter umfassen.

Gemäß der EP 0711 627 B1 enthält eine Ausführung einer hier offenbarten Vorrichtung einen Ultraschallsensor, der das Arbeitsfeld des Laserstrahls abdeckt und daher nicht mitgeführt werden muss, sondern ortsfest bleiben kann. Das zu bearbeitende Fahrzeuginnenverkleidungsteil ist während der Herstellung einer Sollbruchlinie mittels Laser auf den Ultraschallsensor aufgelegt und der Laserstrahl wird entlang der gewünschten Sollbruchlinie geführt, wobei der Abtrag in Form einer kontinuierlichen Nut oder einer Reihe von Perforationslöchern (Sacklöchern) erfolgt. Die Bewegung des Laserstrahls soll beispielsweise über ein System von positionsgesteuerten, verschiebbaren Spiegeln (was durch einen Scanner gegeben wäre) erfolgen oder der Lasergenerator ist an einem Roboterarmmanipulator befestigt.

Der Ultraschallsensor detektiert Signale entsprechend der Dicke des Materials, das nach dem Einkerben mittels des Laserstrahls als Restwand verbleibt und liefert damit ein Rückführungssignal an den zentralen Computer, um die Position des Lasergenerators und/oder seine Ausgangsleistung zu ändern und damit die Dicke der Restwand zu steuern. Als Vorteil gegenüber einer Lösung gemäß dem EP 0 711 627 B1 ist angegeben, dass diese Lösung eine alleinige Bewegung des Laserstrahls, was im Bedarfsfall eine höhere Positioniergeschwindigkeit zwischen dem Laserstrahl und dem jeweiligen Bearbeitungsort auf der Sollbruchlinie ermöglicht. Ein uneingeschränktes praktisches Funktionieren eines ausgedehnten Ultraschallsensors in einer Vorrichtung gemäß der EP 0 711 627 B1 scheint allerdings zweifelhaft. Voraussetzung hierfür wäre zumindest, dass die Sensoroberfläche im luftfreien Kontakt mit der Oberfläche des Fahrzeuginnenverkleidungsteils steht. Dies stellt sich insbesondere dann als schwierig dar, wenn die Oberfläche des Fahrzeuginnenverkleidungsteils eine dreidimensional ausgedehnte Freiformfläche ist oder auch wenn dessen Oberfläche ein strukturiertes Höhenprofil aufweist.

In der DE 10 2007 024 510 B3 ist eine Vorrichtung mit einer auf der Außenseite des zu bearbeitenden Fahrzeuginnenverkleidungsteils angeordneten Sensor offenbart, dessen Messbereich die vollständige Sollbruchlinie erfasst. Der Sensor ist hier eine Matrixkamera, deren Pixel einzeln auslesbar sind. Eine zugehörige Steuer- und Recheneinheit ist mit dem Sensor und einem Lasergenerator, der die Bearbeitungslaserstrahlung generiert, signaltechnisch verbunden. Die Steuer- und Recheneinheit ist dazu ausgelegt, die Ortsdaten der Pixel der Matrixkamera den einzelnen Bearbeitungsorten zugeordnet abzuspeichern, um während der Bearbeitung nur die Pixel auszulesen, die dem jeweils relevanten Bearbeitungsort zugeordnet sind.

Entsprechend exakt muss das Fahrzeuginnenverkleidungsteil zum Sensor ausgerichtet positioniert werden, damit die einzelnen Bearbeitungsorte entlang der Sollbruchlinie zu den jeweils zugeordneten Pixeln eine vorbestimmte Relativlage einnehmen.

Offenbart wird hier lediglich die Ausführung der Matrixkamera als eine CMOS-Kamera.

Vorteilhaft sollen anstelle nur einer Matrixkamera mehrere Matrixkameras angeordnet sein, deren Messbereiche jeweils Teilbereiche der Sollbruchlinie erfassen.

Gemäß dem in der vorgenannten DE 10 2007 024 510 B3 beschriebenen Verfahren wird eine Sollbruchlinie in einem Fahrzeuginnenverkleidungsteil hergestellt, wobei ein Laserstrahl auf eine Innenseite eines in einer Halteeinrichtung ortsfest gehaltenen Fahrzeuginnenverkleidungsteils gerichtet, entlang einer Sollbruchlinie geführt wird und ein Materialabtrag in Form von Löchern mit einer Restwandstärke an einer Vielzahl von Bearbeitungsorten entlang der Sollbruchlinie bewirkt wird. Dabei werden von vorbestimmten Pixeln eines den vollständigen Verlauf der Sollbruchlinie auf der Außenseite des Fahrzeuginnenverkleidungsteils erfassenden, ortsfesten Sensor Messwerte erfasst, die äquivalent für die Restwandstärke sind. In Abhängigkeit von den Messwerten wird im Vergleich mit wenigstens einem Referenzmesswert ein den Laserstrahl emittierender Lasergenerator gesteuert. Wesentlich für das in der vorgenannten DE 10 2007 024 510 B3 offenbarte Verfahren ist, dass zur Bestimmung der Messwerte nur vorbestimmte Pixel einer Matrixkamera ausgelesen werden. Dabei sind die vorbestimmten Pixel die Pixel die den einzelnen Bearbeitungsorten jeweils als empfangsfähige Pixel zugeordnet abgespeichert sind.

Nachteilig an dem vorgenannten Verfahren ist, dass das zu bearbeitende Fahrzeuginnenverkleidungsteil exakt zum Sensor angeordnet werden muss, was einen erhöhten Zeitaufwand bei der Zuführung des Fahrzeuginnenverkleidungsteils in eine Vorrichtung zur Herstellung einer Sollbruchlinie bedeutet.

Es ist die Aufgabe der Erfindung ein Verfahren zu entwickeln, mit dem das Verhältnis zwischen der Arbeitszeit des Lasergenerators und der zur Durchführung des Verfahrens notwendigen Hilfszeiten zugunsten der Arbeitszeit des Lasergenerators verbessert wird.

Es ist auch die Aufgabe der Erfindung eine hierzu geeignete Vorrichtung zu finden und eine Bearbeitungsanlage mit einer solchen Vorrichtung, die eine durch die Vorrichtung verbesserte Produktivität weiter verbessert.

Die Aufgabe für ein Verfahren wird mit einem Verfahren zur Herstellung einer Sollbruchlinie in ein Fahrzeuginnenverkleidungsteil entsprechend Anspruch 1 gelöst, bei dem das Fahrzeuginnenverkleidungsteil aufgegriffen und in einer Arbeitsebene zwischen einer Sensormatrix und einem hierzu definiert angeordneten Bearbeitungskopf, enthaltend eine Laserscaneinrichtung , angeordnet wird, die Laserscaneinrichtung einen Laserstrahl auf einer Innenseite des Fahrzeuginnenverkleidungsteils, eine Scanfigur beschreibend, entlang der Sollbruchlinie scannt, wobei ein Materialabtrag in Form von Löchern jeweils bis zu einer vorgegebenen Restwandstärke an einer Vielzahl von Bearbeitungsorten entlang der Sollbruchlinie bewirkt wird und durch Einzelsensoren der Sensormatrix während des Materialabtrages, verursacht durch einen an den Bearbeitungsorten transmittierenden Anteil des Laserstrahls, Messwerte erfasst werden, aus zeitgleich erfassten Messwerten jeweils ein Vergleichsmesswert gebildet wird, der mit einem Referenzmesswert verglichen wird, dem die vorgegebene Restwandstärke zugeordnet ist, und in Abhängigkeit von einem Vergleichsergebnis ein den Laserstrahl emittierender Lasergenerator gesteuert wird. Dabei ist es erfindungswesentlich, dass die Messwerte aller Einzelsensoren erfasst werden, die oberhalb eines vorgegebenen Schwellwertes liegen, womit die Sollbruchlinie innerhalb eines Sichtfeldes der Sensormatrix beliebig positioniert werden kann, dass eine Ist-Lage des Fahrzeuginnenverkleidungsteils bezogen auf die Laserscaneinrichtung optisch erfasst und daraus eine Ist-Lage der Sollbruchlinie bezogen auf die Laserscaneinrichtung abgeleitet wird und dass eine für eine Soll-Lage der Sollbruchlinie abgespeicherte Soll-Lage einer Scanfigur zum Scannen der Sollbruchlinie in eine Ist-Lage der Scanfigur korrigiert wird, womit beim Scannen der Scanfigur die Sollbruchlinie an einer vorbestimmten Lage am Fahrzeuginnenverkleidungsteil hergestellt wird.

Vorteilhaft wird das Verfahren durchgeführt, indem mittels zweier Zustelleinrichtungen die Fahrzeuginnenverkleidungsteile nacheinander in der Arbeitsebene geordnet werden und eine Ist-Lage der Scanfigur individuell für eine jeweilige Ist-Lage des jeweiligen Fahrzeuginnenverkleidungsteils bestimmt wird.

Bevorzugt wird das erste der drei Fahrzeuginnenverkleidungsteile, in der ersten der zwei Zustelleinrichtungen gehalten bearbeitet, während mit der zweiten Zustelleinrichtung das fertig bearbeitete, zweite Fahrzeuginnenverkleidungsteil zu einem Ausgabeort transportiert und anschließend das noch nicht bearbeitete, dritte Fahrzeuginnenverkleidungsteil an einem Eingabeort aufgenommen und zum Bearbeiten transportiert wird.

Die Aufgabe für eine Vorrichtung wird mit einer Vorrichtung zur Herstellung einer Sollbruchlinie in ein Fahrzeuginnenverkleidungsteil entsprechend Anspruch 4 gelöst, die eine Sensormatrix, einen hierzu definiert angeordneten Bearbeitungskopf, enthaltend eine Laserscaneinrichtung, die mit einem Lasergenerator verbunden ist und einer dazwischen liegenden Arbeitsebene, in der das zu bearbeitende Fahrzeuginnenverkleidungsteil angeordnet wird, sowie einer Steuer- und Recheneinheit enthält. Dabei ist ein Sichtfeld der Sensormatrix größer als eine maximale Ausdehnung einer Sollbruchlinie ist. Es ist eine auf die Arbeitsebene gerichtete Kamera vorhanden, die dazu ausgelegt ist die Ist-Lage des in der Arbeitsebene angeordneten Fahrzeuginnenverkleidungsteils bezogen auf die Laserscaneinrichtung zu erfassen und daraus die Ist-Lage der Sollbruchlinie abzuleiten und die Steuer- und Recheneinheit ist dazu ausgelegt ist die Scanfigur mit der Sollbruchlinie in Übereinstimmung zu bringen. Es ist erfindungswesentlich, dass der Sensormatrix ein Diffuser vorgeordnet ist.

Es ist von Vorteil, wenn die Einzelsensoren der Sensormatrix jeweils eine Empfindlichkeit aufweisen, die so aufeinander abgestimmt sind, dass die Sensormatrix eine homogene Empfindlichkeit aufweist.

Für eine Bearbeitungsanlage wird die Aufgabe mir einer Bearbeitungsanlage mit einer erfindungsgemäßen Vorrichtung zur Herstellung einer Sollbruchlinie in ein Fahrzeuginnenverkleidungsteil entsprechend Anspruch 6 gelöst indem sie mindestens zwei Zustelleinrichtungen enthält mit denen wechselweise ein Fahrzeuginnenverkleidungsteil in die Arbeitsebene der Vorrichtung zur Herstellung einer Sollbruchlinie transportiert und positioniert wird Vorteilhaft enthalten die mindestens zwei Zustelleinrichtungen Mehrachsroboter, welche die Fahrzeuginnenverkleidungsteile jeweils schwebend in der Arbeitsebene halten.

Es ist erfindungswesentlich, dass für eine exakte Herstellung einer Sollbruchlinie in einer vorbestimmten Lage am Fahrzeuginnenverkleidungsteil das zu bearbeitende Fahrzeuginnenverkleidungsteil nur grob in einer Arbeitsebene gehalten werden muss, womit die Zustellzeit des Fahrzeuginnenverkleidungsteils verkürzt wird.

Dadurch, dass alle die Einzelsensoren der Sensormatrix ausgelesen werden, die ein Messsignal oberhalb eines Schwellwertes bilden ist eine genaue Positionierung des Fahrzeuginnenverkleidungsteils zur Sensormatrix nicht erforderlich. Stattdessen erfolgt eine Ausrichtung einer die Sollbruchlinie beschreibenden Scanfigur, zum Fahrzeuginnenverkleidungsteil.

Nachfolgend wird die Erfindung an Ausführungsbeispielen anhand von Zeichnungen näher erläutert. Hierzu zeigen:
- Fig. 1: eine schematische Darstellung einer Vorrichtung zur Herstellung einer Sollbruchlinie in ein Fahrzeuginnenverkleidungsteil und
- Fig.2: eine Bearbeitungsanlage mit einer Vorrichtung nach Fig. 1 und zwei Zustelleinrichtungen.

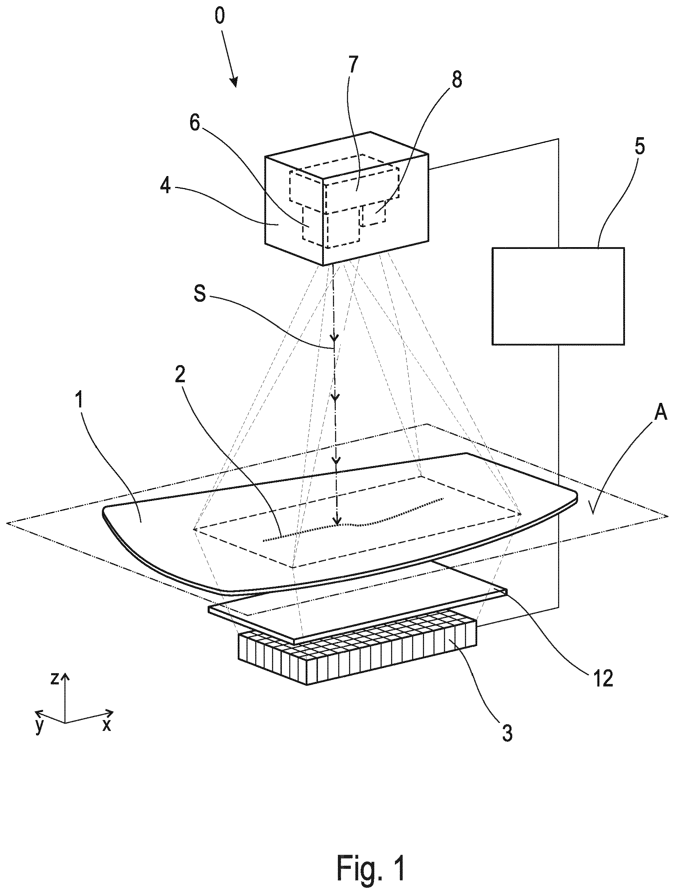

In **Fig. 1** ist eine schematische Darstellung einer erfindungsgemäßen Vorrichtung zur Herstellung einer Sollbruchlinie 0 in ein Fahrzeuginnenverkleidungsteil 1 dargestellt. Sie enthält eine Sensormatrix 3, einen hierzu definiert angeordneten Bearbeitungskopf 4 und eine dazwischenliegende Arbeitsebene A, in der das zu bearbeitende Fahrzeuginnenverkleidungsteil 1 angeordnet wird, sowie eine Steuer- und Recheneinheit 5. Die Arbeitsebene A ist an die Oberflächenkontur des Fahrzeuginnenverkleidungsteils 1 angepasst und muss keine geometrische Ebene sein. Der Bearbeitungskopf 5 enthält einen Lasergenerator 7 oder ist mit einem Lasergenerator 7 verbunden, eine Laserscaneinrichtung 6 und eine zu der Laserscaneinrichtung 6 fest angeordnete Kamera 8. Der Lasergenerator 7, die Laserscaneinrichtung 6 und die Kamera 8 sind mit der Steuer- und Recheneinheit 5 signaltechnisch verbunden.

Ein in der Arbeitsebene A liegendes Sichtfeld der Kamera deckt vorteilhaft wenigstens ein in der Arbeitsebene A liegendes Sichtfeld der Sensormatrix ab. Vorteilhaft sind die beiden Sichtfelder in der Arbeitsebene A gleichgroß und überdecken einander vollständig. Ein Scanbereich der Laserscaneinrichtung, bestimmt durch die maximale Auslenkung eines vom Lasergenerator 7 ausgesendeten Laserstrahls S, in x- und y-Richtung eines Scannerkoordinatensystems, ist auf die Größe des Sichtfeldes der Sensormatrix abgestimmt, so dass dieses möglichst vollständig abgescannt werden kann. Die Kamera 8 und die Lasereinrichtung 6 sind fest miteinander verbunden, womit ein Kamerakoordinatensystem der Kamera eine feste, bekannte Relativlage zu dem Scannerkoordinatensystem des Laserscaneinrichtung hat und womit die Bildkoordinaten eines jeden Bildpunktes eines mit der Kamera 8 erzeugten Bildes jeweils den Scankoordinaten einer Scannerposition der Laserscaneinrichtung 6 zugeordnet werden können.

Für die vollständige Erstellung einer Sollbruchlinie 2 mit einer erfindungsgemäßen Vorrichtung muss das Sichtfeld der Sensormatrix größer als die maximale Ausdehnung einer möglichen Sollbruchlinie 2 sein.

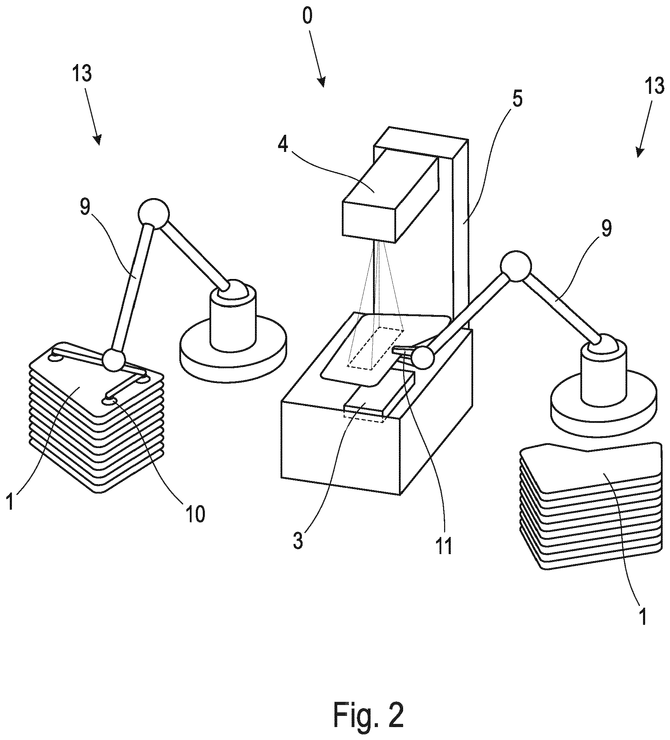

Ein wesentlicher Vorteil einer erfindungsgemäßen Vorrichtung besteht darin, dass ein zu bearbeitendes Fahrzeuginnenverkleidungsteil 1, welches in der Arbeitsebene A gehalten wird, nur grob positioniert werden muss. Grob positionieren heißt hier die herzustellende Sollbruchlinie 2 muss lediglich innerhalb des Sichtfeld der Kamera und innerhalb des Scanfeldes des Laserscaneinrichtung liegen. Damit eröffnet sich die Möglichkeit das Fahrzeuginnenverkleidungsteil 1, z.B. mit einem Mehrachsroboter 9, siehe **Fig.2****,** in der Arbeitsebene A zu halten anstelle es in eine teilespezifische Halteeinrichtung einzulegen, mit der eine höhere Positioniergenauigkeit erreicht wird. Auch kann die Aufnahme des Fahrzeuginnenverkleidungsteils 1 weniger präzise erfolgen, z.B. mit Saugnäpfen 10, was insbesondere zum Halten von größeren Fahrzeuginnenverkleidungsteilen 1, gegenüber einem Greifer 11, vorteilhaft ist. Die Kamera 8 hat die Funktion das in der Arbeitsebene A nur grob positioniert angeordnete Fahrzeuginnenverkleidungsteil1 optisch zu erfassen, um aus den gewonnene Bilddaten mittels der Rechen- und Steuereinheit 5 eine Ist-Lage für das Fahrzeuginnenverkleidungsteil 1 zu bestimmen und eine Ist-Lage für die Sollbruchlinie abzuleiten. Die für eine Soll-Lage der Sollbruchlinie abgespeicherte Soll-Lage einer Scanfigur (vordefinierte Bearbeitungskoordinaten) wird auf eine Ist-Lage korrigiert (korrigierte Bearbeitungskoordinaten) und die Laserscaneinrichtung 6 wird in der Ist-Lage des Fahrzeuginnenverkleidungsteils 1 angesteuert zur Ausführung der Scanfigur entlang der vorbestimmten Lage der Sollbruchlinie. Aus den Bilddaten wird dazu die Relativlage des Fahrzeuginnenverkleidungsteils 1 im Kamerakoordinatensystem und damit relativ zum Scannerkoordinatensystem ermittelt. Dazu werden definierte Merkmale am Fahrzeuginnenverkleidungsteil 1, zu denen die Sollbruchlinie 2 eine bekannte feste Lagebeziehung aufweist in den Bilddaten bestimmt.

In der Rechen- und Steuereinheit 5 können vorteilhaft nicht nur eine Scanfigur sondern mehrere Scanfiguren jeweils bezogen auf eine Soll-Lage oder auch bezogen auf unterschiedliche Soll-Lagen einer herzustellenden Sollbruchlinie abgespeichert sein.

Die Vorrichtung kann daher für verschiedene Fahrzeuginnenverkleidungsteile, die sich durch die Lage und die Kontur der Sollbruchlinie unterscheiden verwendet werden.

Mit der Vorrichtung die Sollbruchlinie 2 am Fahrzeuginnenverkleidungsteil 1 exakt an der vorgegebenen Lage einbringen, obwohl das Fahrzeuginnenverkleidung 1 bei seiner Anordnung in der Arbeitsebene A nur grob positioniert wurde, wird durch die Verwendung der Sensormatrix 3 in Verbindung mit einer bilddatenbasierten Steuerung der Laserscaneinrichtung 6 möglich. Die Sensormatrix 3 weist eine homogene Empfindlichkeit auf, die bevorzugt durch eine elektronische Abstimmung der Empfindlichkeit der Einzelsensoren der Sensormatrix 3 aufeinander eingestellt wurde. Dadurch wird unabhängig von der Anzahl und der Lage der Einzelsensoren die einen Messwert liefern ein gleicher Vergleichswert für eine gleiche Restwandstärke gebildet.

Der Sensormatrix 3 ist ein Diffuser 12 vorgeordnet. Die bei der Herstellung der Sollbruchlinie 2 an den einzelnen Bearbeitungsorten transmittierende Anteiles des Laserstrahls (hier bei soll auch eine am Bearbeitungsort durch den Laserstrahl verursachte Sekundärstrahlung verstanden werden) wird durch den Diffuser 12 gestreut und verteilt sich daher auf eine größere Anzahl von Einzelsensoren als wenn kein Diffuser vorgeordnet wäre.

Eine erfindungsgemäße Vorrichtung 0 eignet sich besonders zum Einbau in eine Fertigungsstrecke, da sie aufgrund ihrer geringen Anforderungen an die Positioniergenauigkeit des zu bearbeitenden Fahrzeuginnenverkleidungsteils zur Vorrichtung für verschiedenste Zustelleinrichtungen 13 kompatibel ist.

Zusammen mit wenigstens einer Zustelleinrichtung 13, bevorzugt mit zwei, bildet sie eine Bearbeitungsanlage, siehe Fig. 2, in der durch die Zustelleinrichtungen 13 wechselweise ein Fahrzeuginnenverkleidungsteil 1, von einem Stapel entnommen und in die Arbeitsebene A der Vorrichtung zur Herstellung einer Sollbruchlinie 2 transportiert wird.

Eine besondere hohe Bewegungsflexibilität ist gegeben, wenn die Zustelleinrichtungen 13 einen Mehrachsroboter 9 enthalten, welcher die Fahrzeuginnenverkleidungsteile 1 jeweils schwebend in der Arbeitsebene A hält.

Bei einem erfindungsgemäßen Verfahren zur Herstellung einer Sollbruchlinie in ein Fahrzeuginnenverkleidungsteil 1 wird das Fahrzeuginnenverkleidungsteil 1 aufgenommen und in einer Arbeitsebene A zwischen einer Sensormatrix 3 und einem hierzu definiert angeordneten Bearbeitungskopf 4, enthaltend eine Laserscaneinrichtung 6, angeordnet.

Die Laserscaneinrichtung 6 richtet einen Laserstrahl S auf eine Innenseite des Fahrzeuginnenverkleidungsteils, und scannt diesen, eine Scanfigur beschreibend, entlang der Sollbruchlinie 2. Dabei erfolgt ein Materialabtrag in Form von Löchern, jeweils bis zu einer vorgegebenen Restwandstärke, an einer Vielzahl von Bearbeitungsorten entlang der Sollbruchlinie 2. Mit zunehmenden Materialabtrag verringert sich an den Bearbeitungsorten jeweils die Restwandstärke zunehmend bis durch Einzelsensoren der Sensormatrix während des Materialabtrages, transmittierende Anteile des Laserstrahls detektiert werden und Messwerte erfasst werden.

Aus zeitgleich, jeweils von einem Einzelsensor der Sensormatrix, erfassten Messwerten, wird ein Vergleichsmesswert gebildet und mit einem Referenzmesswert verglichen, dem die vorgegebene Restwandstärke zugeordnet ist.

Dabei wird ortsunabhängig von den jeweils einen erfassten Messwert liefernden Einzelsensoren ein gleicher Vergleichswert gebildet, wenn am jeweiligen Bearbeitungsort eine gleiche Restwandstärke erreicht ist.

In Abhängigkeit von einem Vergleichsergebnis zwischen dem Vergleichswert und dem Referenzwert wird ein den Laserstrahl S emittierender Lasergenerator 7 gesteuert. Steuern kann hier heißen, dass der Lasergenerator abgeschaltet wird oder dass die Laserparameter, z.B. eine Pulslänge oder eine Pulsamplitude verändert werden.

Es werden die Messwerte aller Einzelsensoren erfasst, die oberhalb eines vorgegebenen Schwellwertes liegen, womit die Sollbruchlinie innerhalb eines Sichtfeldes der Sensormatrix beliebig positioniert werden kann. Allerdings lässt sich auch aus der Kenntnis der groben Positionierung des Fahrzeuginnenverkleidungsteils darauf schließen in welchem Bereich der Sensormatrix Einzelsensoren ein Messsignal liefern werden, womit nicht alle Einzelsensoren ausgelesen werden müssen.

Während bei einer exakten Positionierung des Fahrzeuginnenverkleidungsteils zu einer Laserscaneinrichtung, wie im Stand der Technik üblich, die Sollbruchlinie in einer Soll-Lage angeordnet ist, so dass eine hierfür abgespeicherte Scanfigur die Sollbruchlinie beschreibt, wird hier erfindungsgemäß die für die Soll-Lage der Sollbruchlinie abgespeicherte Soll-Lage der Scanfigur auf eine der konkreten Ist-Lage zugeordnete Ist-Lage für die Scanfigur korrigiert.

Dazu wird die Ist-Lage des Fahrzeuginnenverkleidungsteils bezogen auf die Laserscaneinrichtung mit einer Kamera optisch erfasst und die Ist-Lage der Sollbruchlinie bezogen auf die Laserscaneinrichtung abgeleitet.

Eine für die Soll-Lage der Sollbruchlinie abgespeicherte Soll-Lage der Scanfigur wird in eine Ist-Lage der Scanfigur korrigiert wird, womit die Scanfigur mit der Sollbruchlinie in Übereinstimmung gebracht wird.

Das Verfahren wird vorteilhaft durchgeführt, indem mittels zwei Zustelleinrichtungen die Fahrzeuginnenverkleidungsteile nacheinander in der Arbeitsebene angeordnet werden Dabei wird bevorzugt das erstes der drei Fahrzeuginnenverkleidungsteile, in der ersten der zwei Zustelleinrichtungen gehalten, bearbeitet, während mit der zweiten Zustelleinrichtung das fertig bearbeitete, zweite Fahrzeuginnenverkleidungsteil zu einem Ausgabeort transportiert und anschließend das noch nicht bearbeitete, dritte Fahrzeuginnenverkleidungsteil an einem Eingabeort aufgenommen und zur Bearbeitung transportiert wird.

Idealerweise ist die Sensormatrix über ihre Ausdehnung in ihrer Empfindlichkeit homogen. Das lässt sich optimieren indem der transmittierende Anteil des Laserstrahls gestreut wird, womit mehr Einzelsensoren transmittierende Anteile detektieren und Messwerte erfasst werden und damit eine eventuelle Schwankungsbreite relativiert wird.

### Bezugszeichenliste

- 0: Vorrichtung (zur Herstellung einer Sollbruchlinie)
- 1: Fahrzeuginnenverkleidungsteil
- 2: Sollbruchlinie
- 3: Sensormatrix
- 4: Bearbeitungskopf
- 5: Steuer- und Recheneinheit
- 6: Laserscaneinrichtung
- 7: Lasergenerator
- 8: Kamera
- 9: Mehrachsroboter
- 10: Saugnapf
- 11: Greifer
- 12: Diffuser
- 13: Zustelleinrichtung

- A: Arbeitsebene
- S: Laserstrahl

## Patentansprüche

1. Verfahren zur Herstellung einer Sollbruchlinie (2) in ein Fahrzeuginnenverkleidungsteil (1),
bei dem das Fahrzeuginnenverkleidungsteil (1) aufgegriffen und in einer Arbeitsebene (A) zwischen einer Sensormatrix (3) und einem hierzu definiert angeordneten Bearbeitungskopf (4), enthaltend eine Laserscaneinrichtung (6), angeordnet wird,
die Laserscaneinrichtung (6) einen Laserstrahl (S) auf einer Innenseite des Fahrzeuginnenverkleidungsteils (1), eine Scanfigur beschreibend, entlang der Sollbruchlinie (2) scannt, wobei ein Materialabtrag in Form von Löchern jeweils bis zu einer vorgegebenen Restwandstärke an einer Vielzahl von Bearbeitungsorten entlang der Sollbruchlinie (2) bewirkt wird und durch Einzelsensoren der Sensormatrix (3) während des Materialabtrages, verursacht durch einen an den Bearbeitungsorten transmittierenden Anteil des Laserstrahls (S), Messwerte erfasst werden,
aus zeitgleich erfassten Messwerten jeweils ein Vergleichsmesswert gebildet wird, der mit einem Referenzmesswert verglichen wird, dem die vorgegebene Restwandstärke zugeordnet ist, und
in Abhängigkeit von einem Vergleichsergebnis ein den Laserstrahl (S) emittierender Lasergenerator (7) gesteuert wird,
**dadurch gekennzeichnet**
**dass** die Messwerte aller Einzelsensoren erfasst werden, die oberhalb eines vorgegebenen Schwellwertes liegen, womit die Sollbruchlinie (2) innerhalb eines Sichtfeldes der Sensormatrix beliebig positioniert werden kann,
**dass** eine Ist-Lage des Fahrzeuginnenverkleidungsteils (1) bezogen auf die Laserscaneinrichtung (6) mittels einer auf die Arbeitsebene (A) gerichteten Kamera (8) optisch erfasst und daraus eine Ist-Lage der Sollbruchlinie bezogen auf die Laserscaneinrichtung (6) abgeleitet wird,
**dass** eine für eine Soll-Lage der Sollbruchlinie abgespeicherte Soll-Lage einer Scanfigur zum Scannen der Sollbruchlinie (2) in eine Ist-Lage der Scanfigur korrigiert wird, womit beim Scannen der Scanfigur die Sollbruchlinie (2) an einer vorbestimmten Lage am Fahrzeuginnenverkleidungsteil (1) hergestellt wird, und dass der transmittierende Anteil des Laserstrahls (S) gestreut wird, damit von mehr Einzelsensoren Messwerte erfasst werden.

2. Verfahren zur Herstellung einer Sollbruchlinie (2) in ein Fahrzeuginnenverkleidungsteil (1) nach Anspruch 1, **dadurch gekennzeichnet, dass** von zwei Zustelleinrichtungen (13) wechselweise ein Fahrzeuginnenverkleidungsteil (1) aufgegriffen und nacheinander in der Arbeitsebene (A) geordnet wird und eine Ist-Lage der Scanfigur individuell für eine jeweilige Ist-Lage des jeweiligen Fahrzeuginnenverkleidungsteils (1) bestimmt wird.

3. Verfahren zur Herstellung einer Sollbruchlinie (2) in ein Fahrzeuginnenverkleidungsteil (1) nach Anspruch 2, **dadurch gekennzeichnet, dass** ein erstes von drei Fahrzeuginnenverkleidungsteilen (1), in der ersten der zwei Zustelleinrichtungen (13) gehalten bearbeitet wird, während mit der zweiten der zwei Zustelleinrichtungen (13) ein fertig bearbeitetes, zweites Fahrzeuginnenverkleidungsteil (1) zu einem Ausgabeort transportiert und anschließend ein noch nicht bearbeitetes, drittes Fahrzeuginnenverkleidungsteil (1) an einem Eingabeort aufgenommen und zum Bearbeiten transportiert wird.

4. Vorrichtung (0) zur Herstellung einer Sollbruchlinie (2) in ein Fahrzeuginnenverkleidungsteil (1), mit einer Sensormatrix (3), Einzelsensoren umfassend, einem hierzu definiert angeordneten Bearbeitungskopf (4), enthaltend eine Laserscaneinrichtung (6), die mit einem Lasergenerator (7) verbunden ist, und einer dazwischen liegenden Arbeitsebene (A), in der das zu bearbeitende Fahrzeuginnenverkleidungsteil (1) angeordnet wird, sowie einer Steuer- und Recheneinheit (5), wobei
ein Sichtfeld der Sensormatrix (3) größer als eine maximale Ausdehnung einer Sollbruchlinie (2) ist,
**dadurch gekennzeichnet,**
**dass** eine auf die Arbeitsebene (A) gerichtete Kamera (8) vorhanden ist, die dazu ausgelegt ist die Ist-Lage des in der Arbeitsebene (A) angeordneten Fahrzeuginnenverkleidungsteils (1) bezogen auf die Laserscaneinrichtung (6) zu erfassen, um daraus eine Ist-Lage der Sollbruchlinie (2) abzuleiten,
**dass** die Steuer- und Recheneinheit (5) dazu ausgelegt ist eine Scanfigur mit der Sollbruchlinie (2) in Übereinstimmung zu bringen und
**dass** der Sensormatrix (3) ein Diffuser (12) vorgeordnet ist.

5. Vorrichtung (0) zur Herstellung einer Sollbruchlinie (2) in ein Fahrzeuginnenverkleidungsteil (1) nach Anspruch 4, **dadurch gekennzeichnet, dass** Einzelsensoren der Sensormatrix (3) jeweils eine Empfindlichkeit aufweisen, die so aufeinander abgestimmt sind, dass die Sensormatrix (3) eine homogene Empfindlichkeit aufweist.

6. Bearbeitungsanlage mit einer Vorrichtung zur Herstellung einer Sollbruchlinie in ein Fahrzeuginnenverkleidungsteil nach einem der Ansprüche 4 oder 5, **dadurch gekennzeichnet,**
**dass** sie mindestens zwei Zustelleinrichtungen enthält, mit denen wechselweise ein Fahrzeuginnenverkleidungsteil (1) in die Arbeitsebene (A) der Vorrichtung zur Herstellung einer Sollbruchlinie (2) transportiert und positioniert wird.

7. Bearbeitungsanlage gemäß Anspruch 6, **dadurch gekennzeichnet,**
**dass** die mindestens zwei Zustelleinrichtungen (13) Mehrachsroboter (9) enthalten, welche die Fahrzeuginnenverkleidungsteile (1) jeweils schwebend in der Arbeitsebene (A) halten.

## Claims

1. A method for producing a predetermined breaking line (2) in a vehicle interior trim part (1),
wherein the vehicle interior trim part (1) is picked up and arranged in a working plane (A) between a sensor matrix (3) and a machining head (4) arranged in a defined manner with respect thereto and containing a laser scanning device (6), the laser scanning device (6) scans a laser beam (S) on an inner side of the vehicle interior trim part (1), describing a scan figure, along the predetermined breaking line (2), wherein material removal in the form of holes is effected in each case down to a predetermined residual wall thickness at a plurality of machining locations along the predetermined breaking line (2) and measured values are acquired by individual sensors of the sensor matrix (3) during the material removal caused by a portion of the laser beam (S) transmitted at the machining locations,
a respective comparative measured value is formed from measured values acquired simultaneously and is compared with a reference measured value to which the predetermined residual wall thickness is assigned, and
a laser generator (7) emitting the laser beam (S) is controlled as a function of a comparison result,
**characterized in that**
the measured values of all individual sensors that lie above a predefined threshold value are acquired, which means that the predetermined breaking line (2) can be positioned as desired within a field of view of the sensor matrix,
an actual position of the vehicle interior trim part (1) relative to the laser scanning device (6) is optically detected by means of a camera (8) directed towards the working plane (A) and an actual position of the predetermined breaking line relative to the laser scanning device (6) is derived therefrom,
a desired position of a scan figure stored for a desired position of the predetermined breaking line for scanning the predetermined breaking line (2) is corrected to an actual position of the scan figure, whereby the predetermined breaking line (2) is produced at a predetermined position on the vehicle interior trim part (1) during scanning of the scan figure, and
the transmitted part of the laser beam (S) is scattered so that measured values are acquired by more individual sensors.

2. The method for producing a predetermined breaking line (2) in a vehicle interior trim part (1) according to claim 1, **characterized in that**
two feeding means (13) alternately pick up a vehicle interior trim part (1) and arrange it sequentially in the working plane (A), and that an actual position of the scan figure is determined individually for a respective actual position of the respective vehicle interior trim part (1).

3. The method for producing a predetermined breaking line (2) in a vehicle interior trim part (1) according to claim 2, **characterized in that**
a first of three vehicle interior trim parts (1) is machined while being held in the first of the two feeding means (13), while the second of the two feeding means (13) transports a finished second vehicle interior trim part (1) to an output location and then picks up an unmachined third vehicle interior trim part (1) at an input location and transports it for machining.

4. A device (0) for producing a predetermined breaking line (2) in a vehicle interior trim part (1), said device (0) including a sensor matrix (3) which comprises individual sensors, a machining head (4) arranged in a defined manner with respect to the sensor matrix (3), said machining head (4) containing a laser scanning device (6) connected to a laser generator (7), and an intermediate working plane (A), in which the vehicle interior trim part (1) to be machined is arranged, as well as a control and computing unit (5),
wherein a field of view of the sensor matrix (3) is larger than a maximum extension of a predetermined breaking line (2),
**characterized in that**
a camera (8) directed towards the working plane (A) is present, which is configured to detect the actual position of the vehicle interior trim part (1) arranged in the working plane (A) in relation to the laser scanning device (6) in order to derive therefrom an actual position of the predetermined breaking line (2),
the control and computing unit (5) is configured to bring a scan figure into alignment with the predetermined breaking line (2), and
a diffuser (12) is arranged upstream of the sensor matrix (3).

5. The device (0) for producing a predetermined breaking line (2) in a vehicle interior trim part (1) according to claim 4, **characterized in that**
individual sensors of the sensor matrix (3) each have a sensitivity that is matched to each other so that the sensor matrix (3) has a homogeneous sensitivity.

6. A machining installation comprising a device for producing a predetermined breaking line in a vehicle interior trim part according to any one of claims 4 to 5, **characterized in that**
it contains at least two feeding means by which a vehicle interior trim part (1) is alternately transported and positioned in the working plane (A) of the device for producing a predetermined breaking line (2).

7. The machining installation according to claim 6, **characterized in that**
the at least two feeding means (13) include multi-axis robots (9), which hold the vehicle interior trim parts (1) suspended in the working plane (A) in each case.

## Revendications

1. Procédé de production d'une ligne de rupture (2) dans un élément d'habillage intérieur de véhicule (1),
dans lequel l'élément d'habillage intérieur de véhicule (1) est saisi et disposé dans un plan de travail (A) entre une matrice de capteurs (3) et une tête d'usinage (4) disposée de manière définie à ladite matrice de capteurs (3) et comprenant un dispositif de balayage laser (6),
le dispositif de balayage laser (6) balaye un faisceau laser (S) sur une face intérieure de l'élément d'habillage intérieur de véhicule (1), décrivant une figure de balayage, le long de la ligne de rupture (2), un enlèvement de matière sous forme de trous étant effectué jusqu'à une épaisseur de paroi résiduelle prédéfinie en un grand nombre de lieux d'usinage le long de la ligne de rupture (2) et des valeurs de mesure étant saisies par des capteurs individuels de la matrice de capteurs (3) pendant l'enlèvement de matière, provoqué par une partie du faisceau laser (S) transmise aux lieux d'usinage,
une valeur de mesure comparative est formée, à chaque fois, à partir de valeurs de mesure saisies simultanément, laquelle est comparée à une valeur de mesure de référence à laquelle est attribuée l'épaisseur de paroi résiduelle prédéfinie, et
en fonction d'un résultat de comparaison, un générateur laser (7) émettant le faisceau laser (S) est commandé,
**caractérisé**
**en ce que** les valeurs de mesure de tous les capteurs individuels qui dépassent une valeur seuil prédéfinie sont saisies, ce qui permet de positionner la ligne de rupture (2) à n'importe quel endroit dans le champ de vision de la matrice de capteurs,
**en ce qu'**une position réelle de l'élément d'habillage intérieur de véhicule (1) par rapport au dispositif de balayage laser (6) est détectée optiquement à l'aide d'une caméra (8) orientée vers le plan de travail (A) et qu'à partir de là, une position réelle de la ligne de rupture par rapport au dispositif de balayage laser (6) est déduite,
**en ce qu'**une position de consigne d'une figure de balayage enregistrée pour une position de consigne de la ligne de rupture, ladite figure de balayage étant prévue pour le balayage de la ligne de rupture (2), est corrigée en une position réelle de la figure de balayage, de sorte que, lors du balayage de la figure de balayage, la ligne de rupture (2) est réalisée à une position prédéterminée sur l'élément d'habillage intérieur de véhicule (1), et
**en ce que** la partie transmise du faisceau laser (S) est diffusée afin que davantage de capteurs individuels puissent saisir des valeurs de mesure.

2. Procédé de production d'une ligne de rupture (2) dans un élément d'habillage intérieur de véhicule (1) selon la revendication 1, **caractérisé**
**en ce que** deux moyens d'avancement (13) saisissent alternativement un élément d'habillage intérieur de véhicule (1) et le placent successivement dans le plan de travail (A) et qu'une position réelle de la figure de balayage est déterminée individuellement pour une position réelle respective de l'élément d'habillage intérieur de véhicule (1) respectif.

3. Procédé de production d'une ligne de rupture (2) dans un élément d'habillage intérieur de véhicule (1) selon la revendication 2, **caractérisé**
**en ce qu'**un premier de trois éléments d'habillage intérieur de véhicule (1) est usiné étant maintenue dans le premier des deux moyens d'avancement (13), tandis qu'avec le deuxième des deux moyens d'avancement (13), un deuxième élément d'habillage intérieur de véhicule (1) usiné est transporté vers un lieu de sortie, puis un troisième élément d'habillage intérieur de véhicule (1) non encore usiné est saisi à un lieu d'alimentation et transporté pour être usiné.

4. Dispositif (0) de production d'une ligne de rupture (2) dans un élément d'habillage intérieur de véhicule (1), comprenant une matrice de capteurs (3) comportant des capteurs individuels, une tête d'usinage (4) disposée de manière définie à ladite matrice de capteurs (3), contenant un dispositif de balayage laser (6) qui est relié à un générateur laser (7), et un plan de travail (A) situé entre ceux-ci, dans lequel est disposée l'élément d'habillage intérieur de véhicule (1) à usiner, ainsi qu'une unité de commande et de calcul (5),
le champ de vision de la matrice de capteurs (3) étant plus grand qu'une extension maximale d'une ligne de rupture (2),
**caractérisé**
**en ce qu'**il existe une caméra (8) orientée vers le plan de travail (A), qui est conçue pour détecter la position réelle de l'élément d'habillage intérieur de véhicule (1) disposé dans le plan de travail (A) par rapport au dispositif de balayage laser (6), afin d'en déduire une position réelle de la ligne de rupture (2),
**en ce que** l'unité de commande et de calcul (5) est conçue pour aligner une figure de balayage avec la ligne de rupture (2) et
**en ce qu'**un diffuseur (12) est disposé en amont de la matrice de capteurs (3).

5. Dispositif (0) de production d'une ligne de rupture (2) dans un élément d'habillage intérieur de véhicule (1), selon la revendication 4, **caractérisé en ce que** les capteurs individuels de la matrice de capteurs (3) présentent chacun une sensibilité qui est adaptée aux autres de telle sorte que la matrice de capteurs (3) présente une sensibilité homogène.

6. Installation d'usinage avec un dispositif de production d'une ligne de rupture dans un élément d'habillage intérieur de véhicule selon l'une quelconque des revendications 4 ou 5, **caractérisée**
**en ce qu'**elle comprend au moins deux moyens d'avancement avec lesquels un élément d'habillage intérieur de véhicule (1) est transporté et positionné alternativement dans le plan de travail (A) du dispositif de production d'une ligne de rupture (2).

7. Installation d'usinage selon la revendication 6, **caractérisée**
**en ce que** les au moins deux moyens d'avancement (13) comprennent des robots multiaxes (9) qui maintiennent les éléments d'habillage intérieur de véhicule (1) en suspension dans le plan de travail (A).
